# EUROPEAN PATENT SPECIFICATION

(11) **EP 1 501 744 B1**
(45) Date of publication and mention of the grant of the patent: **19.12.2012**
(21) Application number: 03719416.4
(22) Date of filing: 18.03.2003
(51) Int. Cl.: B32B 33/00, B65D 83/04

(54) **CHILD RESISTANT SENIOR FRIENDLY BLISTER PACKAGE**
KINDERSICHERE SENIORENFREUNDLICHE BLISTERVERPACKUNG
EMBALLAGE COQUE Á L'EPREUVE DES ENFANTS ET FACILE Á UTILISER PAR DES PERSONNES AGÉES

(30) Priority: 18.03.2002 US 100610
(43) Date of publication of application: 02.02.2005
(73) Proprietor: GP Solutions (UK) Limited, Swinton Manchester Lancashire M27 8UW (GB)
(72) Inventor: BOLNICK, Martin, Boca Raton, FL (US); BOLNICK, Richard, Roslyn Heights, NY 11577 (US)
(74) Representative: Merrifield, Sarah Elizabeth
(86) International application number: PCT/US2003/008376
(87) International publication number: WO 2003/080468

(56) References cited:
- US-A- 3 835 995
- US-A- 3 899 080
- US-A- 4 211 329
- US-A- 4 260 061
- US-A- 5 014 851
- US-A- 5 469 968
- US-A- 6 006 913
- US-A- 6 155 423

## Description

### FIELD OF THE INVENTION

The present invention relates to a child resistant and senior friendly blister package.

### BACKGROUND

Conventional blister cards often utilize a retaining label, such as paper, or foil, to retain a medicament in the medicament compartment or "blister" of a blister card. When the user wishes to use the medicament, the medicament is pushed through the retaining label. One shortcoming of this conventional blister card packaging is that a child may tamper with the package and release the medicament. One approach to making conventional blister cards resistant to tampering by children is to increase the thickness of the label so that more strength is required to push the medicament through the sheet. Another approach is to vary the composition of the material utilized to make the sheet so that the sheet is more resistant to puncture. Still another approach is to utilize multiple sheets so that it is more difficult for a child to push the medicament through the retaining sheet. One major shortcoming of all of these approaches is that they are not senior friendly, i.e., as the blister card becomes more resistant to tampering by children, it becomes more difficult for the elderly or the infirm to remove the medicament when needed. This is especially important for patients with arthritis or patients who may have the use of only one hand. Accordingly, there exists a need for a blister card that is both resistant to tampering by children and that will also permit a senior to easily release the medicament from the blister card when needed.

US 5,469,968 describes a childproof covering for a blister pack comprising a first layer with a first pattern of perforations, the first layer adhered to a second layer with a second pattern of perforations, the second layer also adhered to a frangible foil layer covering a medicament containing element. The first and second layers are successively peelable to allow access to the foil layer which can then be broken to access medicament in the medicament containing element. The document US 5 469 968 discloses a blister package comprising a first sheet having a first major surface and a second major surface, feature (b) as defined in appended claim 1 and a medicament containment sheet having a first major surface and a second major surface, the second major surface of the containment sheet attached to the blister package.

### SUMMARY OF THE INVENTION

The present invention provides a child resistant and senior friendly blister package as set out in claim 1.

In accordance with one specific embodiment of the present invention a child resistant/senior friendly blister card is provided comprising a first sheet having a first major surface and a second major surface and a plurality of selectively removable portions. The second major surface is provided with a temporary adhesive. A second sheet has a first major surface and a second major surface and a plurality of removable portions. The second sheet is interposed between the first sheet and the medicament containment sheet. The first major surface of the second sheet is attached to the second major surface of the first sheet. The second major surface of the second sheet provided with a permanent adhesive. A blister card has a plurality of medicament compartments with each of the plurality of compartments having a closed bottom end and an open top end for receiving a medicament. A medicament containment sheet has a first major surface and a second major surface, and the second major surface of the containment sheet is attached to the blister card. The first major surface of the containment sheet is attached to the permanent adhesive on the second major surface of the second sheet. The removable portions of the fist sheet are in registry with the open top ends of the medicament compartments. The temporary adhesive on the second major surface of the first sheet has an adhesive strength that is sufficient to adhere the first sheet to the first major surface of the second sheet and an adhesive strength that allows the selectively removable portions of the first sheet to be removed from the second sheet without removing the selectively removable portions of the second sheet to which the first sheet is attached.

In another specific embodiment a child resistant/senior friendly blister card is provided comprising a first sheet having a first major surface and a second major surface and a plurality of selectively removable portions. The second major surface is provided with a temporary adhesive. A second sheet has a first major surface and a second major surface and provided with a plurality of apertures. The second sheet is interposed between the first sheet and the medicament containment sheet. The first major surface of the second sheet is attached to the second major surface of the first sheet and the second major surface of the second sheet is provided with a permanent adhesive. A blister card has a plurality of medicament compartments with each of the plurality of compartments having a closed bottom end and an open top end for receiving a medicament. A medicament containment sheet has a first major surface and a second major surface. The second major surface of the containment sheet is attached to the blister card and the first major surface of the containment sheet is attached to the permanent adhesive on the second major surface of the second sheet. The removable portions of the first sheet are in registry with the open top ends of the medicament compartments and also in registry with the apertures in the second sheet. The temporary adhesive on the second major surface of the first sheet has an adhesive strength that is sufficient to adhere the first sheet to the first major surface of the second sheet and adhere the first sheet to the first major surface of the medicament containment sheet, and an adhesive strength that allows the selectively removable portions in the first sheet to be removed without removing the portions of the medicament containment sheet covering the open top ends of the medicament compartments to which the first sheet is attached.

### BRIEF DESCRIPTION OF THE DRAWINGS

In the following, Figures 22-33 show embodiments of the invention. The other figures show prior art, or examples of other blister packs for completeness and to put the invention in context.
Figure 1 shows a conventional blister card containing a medicament;
Figure 2 shows the medicament shown in Figure 1 being dispensed;
Figure 3 is an exploded view of a label form;
Figure 4 shows a major surface of a first sheet;
Figure 5 shows a major surface of a second sheet;
Figure 6 shows the second sheet of Figure 5 superimposed on the first sheet of Figure 4;
Figure 7 shows the exploded view of the label form of Figure 3 in the assembled configuration;
Figure 8 shows the first major surface of a first sheet;
Figure 9 shows a label form and blister card;
Figure 10 shows the label form of Figure 9 with a removable portion removed;
Figure 11 shows how the medicament shown in Figure 10 is dispensed;
Figure 12 is a top view of another label form;

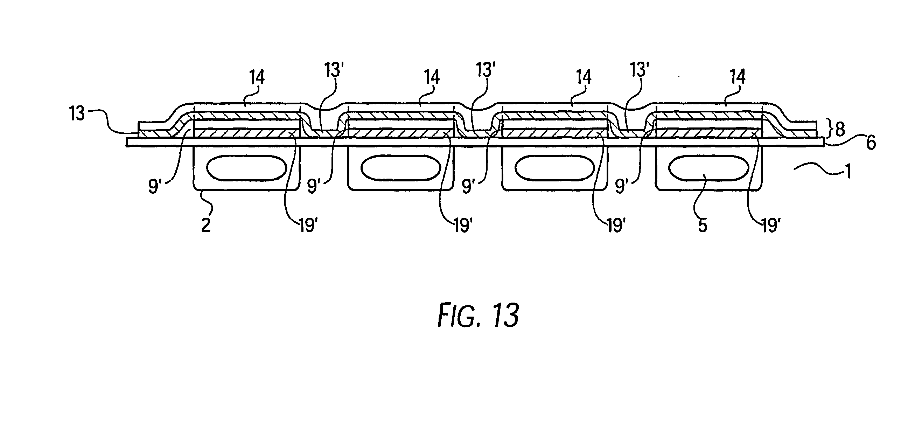

Figure 13 is a side view of the label form shown in Figure 12 applied to a blister card;
Figure 14 is an exploded view of an alternative child resistant blister card;
Figure 15 shows the components of Figure 14 after they have been assembled;
Figure 16 shows a medicament being dispensed from the blister card of Figure 15;
Figure 17 is an exploded view of an alternative child resistant blister card;
Figure 18 shows the components of Figure 17 after they have been assembled;
Figure 19 shows a medicament being dispensed from the blister card of Figure 18;
Figure 20 shows an alternative embodiment of the blister card shown in Figure 14;
Figure 21 shows an alternate embodiment of the blister card shown in Figure 17;
Figure 22 is a top view of a label constructed in accordance with the invention;
Figure 23 is a bottom view of Figure 22;
Figure 24 is an exploded end-view of an alternate embodiment taken along line 24 - 24 of Figure 22;
Figure 25 shows the components of Figure 24 after they have been assembled;
Figure 26 is an exploded side-view taken along line 26 - 26 of Figure 22;
Figure 27 shows the components of Figure 26 after they have been assembled.
Figure 28 is a top view of a label constructed in accordance with the invention;
Figure 29 is a bottom view of Figure 28;
Figure 30 is an exploded end-view of an alternate embodiment taken along line 30 - 30 of Figure 28;
Figure 31 shows the components of Figure 30 after they have been assembled;
Figure 32 is an exploded side-view taken along line 32 - 32 of Figure 28; and
Figure 33 shows the components of Figure 32 after they have been assembled.

### DETAILED DESCRIPTION OF THE INVENTION

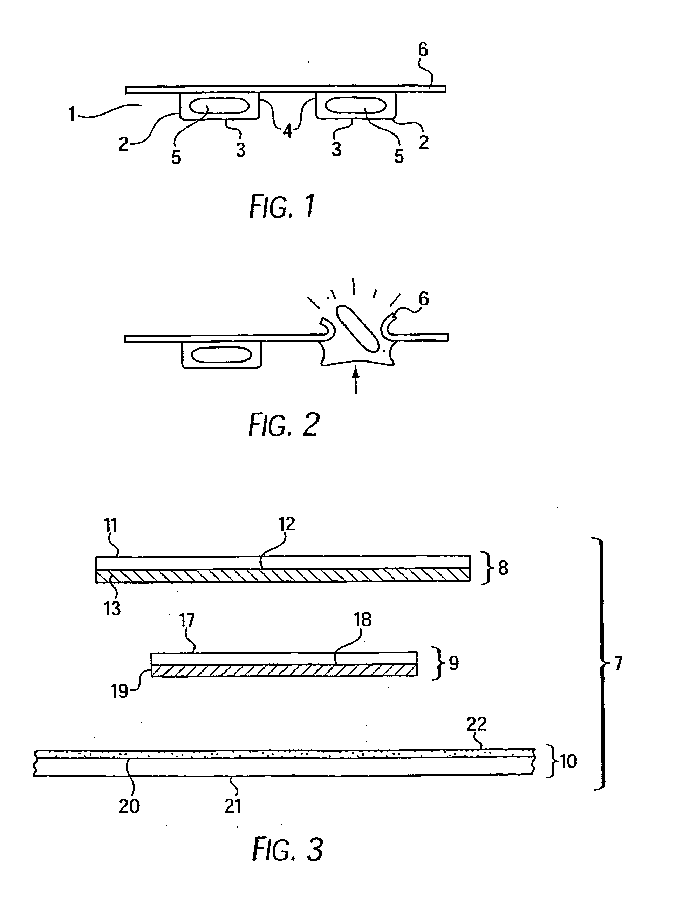

Figure 1 is a side view of a conventional blister card package 1. The blister card 1 is provided with a plurality of medicament compartments, or pockets 2, having a closed bottom end 3 and an open top end 4 for receiving and storing a medicament 5. A medicament retaining sheet 6 is permanently attached to the blister card 1 and covers the open top end 4 of the medicament compartment 2 so that the medicament 5 is retained in the medicament compartment until required. When the user desires to dispense the medicament 5, the retaining sheet 6 is either cut or punctured to release the medicament 5. This is often accomplished by simply using a thumb or finger to apply pressure to the closed bottom end 3 of the medicament compartment 2 and pushing the medicament 5 through the retaining sheet 6 as shown in Figure 2. The thickness of the retaining sheet 6 and the material utilized to make the retaining sheet 6 may be varied to vary the degree of pressure or strength required to puncture the retaining sheet.

Figure 3 is an exploded view of a label form 7 for a child resistant/senior friendly blister card and shows a first sheet 8, a second sheet 9, and a carrying sheet 10.

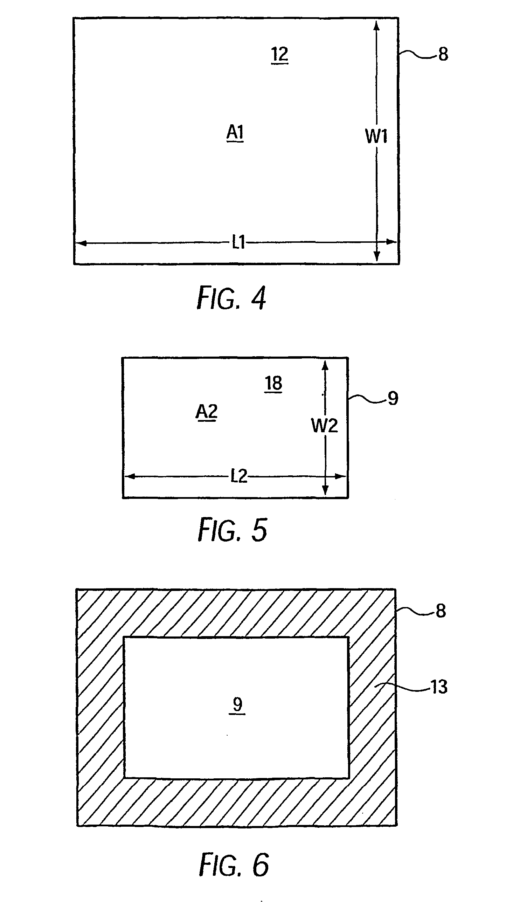

The first sheet 8 has a first major surface 11 and a second major surface 12. The first sheet 8 is preferably comprised of paper or a synthetic material. A permanent adhesive 13 is attached to the second major surface 12 of the first sheet 8. Figure 4 is a view of the second major surface 12 of the first sheet 8 and shows that the first sheet 8 has a first length L₁ and a first width W₁ defining a first area A₁.

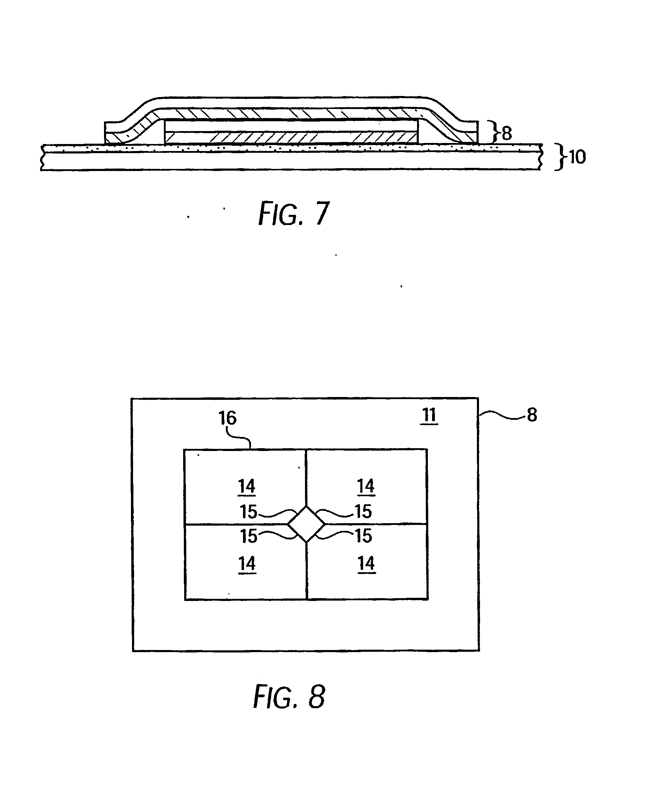

Figure 8 shows the first major surface 11 of the first sheet 8 and shows that the first sheet 8 is provided with a plurality of removable portions 14 that are selectively removable. Facilitation notches 15 may be provided to facilitate the selective removal of the removable portions 14.

Perforations, cuts, or scoring 16 may also be provided in the first sheet 8 to facilitate the removal of each of the removable portions 14.

As shown in Figure 3, the second sheet 9 has a first major surface 17 and a second major surface 18. The second sheet 9 is preferably comprised of a synthetic material. A removable or temporary adhesive 19 is applied to the second major surface 18 of the second sheet 9. Figure 5 is a view of the second major surface 18 of the second sheet 9 and shows that the second sheet 9 has a second length L₂ and a second width W₂ defining a second area A₂ that is smaller than A₁.

As shown in Figure 3, the carrying sheet 10 has a first major surface 20 and a second major surface 21. The first major surface 20 of the carrying sheet 10 is provided with a non-stick surface 22. In a preferred embodiment, the non-stick coating is silicone. Figure 7 shows the exploded label set of Figure 3 as it appears when assembled. When assembled, the first major surface 17 of the second sheet 9 is attached to the permanent adhesive 13 on the second surface 12 of the first sheet 8. The removable adhesive 19 disposed on the second major surface 18 of the second sheet 9 is attached to the non-stick surface 22 disposed on the first major surface 20 of the carrying sheet 10. The second sheet 9 is disposed within A₁ of the first sheet 8 so that a portion of the permanent adhesive 13 on the second major surface 12 of the first sheet borders or surrounds the second sheet 9 as shown in Figure 6. The removable portions 14 of the first sheet 8 are disposed within the second area A₂ defined by L₂ and W₂ of the second sheet as shown in Figure 8.

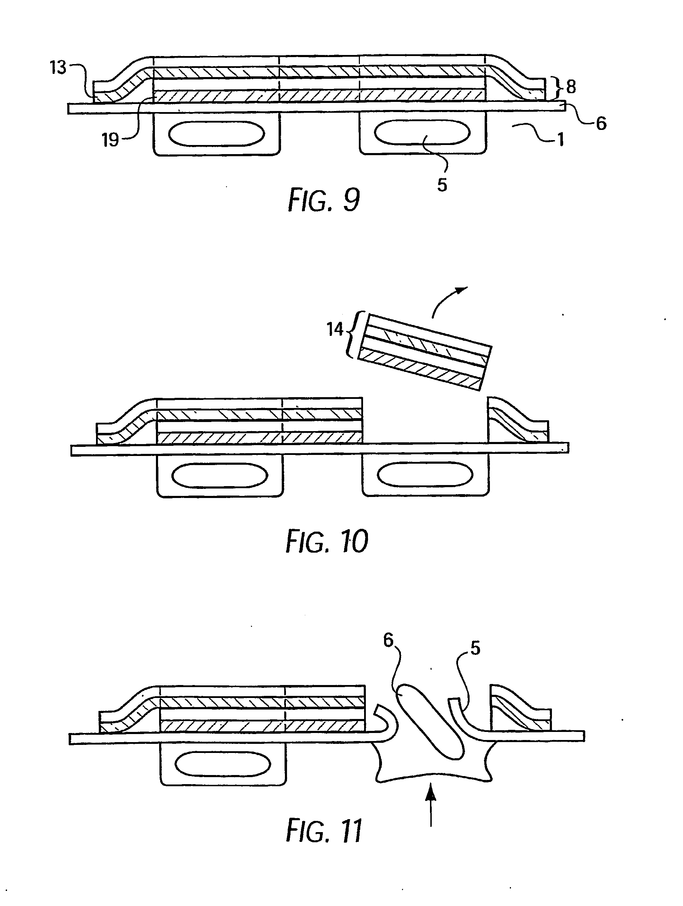

In operation, the label form shown in Figure 7 is removed from the carrying sheet 10 and is applied to a blister card 1 as shown in Figure 9. Figure 9 shows a blister card 1 containing a medicament 5. The medicament 5 is held in place by a medicament retaining sheet 6. The label form is removed from the carrying sheet 10 and is attached to the medicament retaining sheet 6. The portion of the permanent adhesive 13 that surrounds the second sheet 9 permanently adheres the label form to the medicament retaining sheet 6. The removable portions 14 of the first sheet 8 are in registry with the medicament compartments 2 of the blister card 1. When the label form is applied to the blister card 1 the blister card 1 is resistant to tampering by children because the medicament retaining sheet 6, the second sheet 9, and the first sheet 8 cooperate to provide greater resistance to a child attempting to push the medicament 5 through the three layers 8, 9, and 6.

Although resistant to tampering by children, the blister card 1 is also senior friendly because an adult would first remove the removable portion 14 of the first sheet 8 as shown in Figure 10. Removing the removable portion 14 of the first sheet 8 also removes the portion of the second sheet 9 that is permanently attached to the permanent adhesive 13 on the second major surface 12 of the first sheet 8. Thus, only the medicament retaining sheet 6 prevents the medicament 5 from being removed from the medicament compartment 2 as shown in Figure 10. The user then pushes the medicament 5 through the medicament retaining sheet 6 as shown in Figure 11 and as previously discussed.

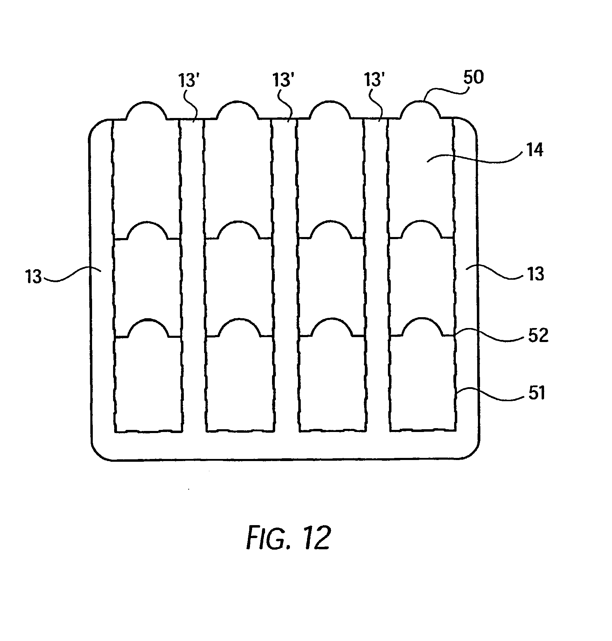

In the embodiment shown in Figures 11 and 12, the second sheet is not a continuous sheet as disclosed in Figures 3 to 11. Instead, a plurality of discrete second sheets 9' are disposed as discrete portions or strips. This permits the portions 13' of the permanent adhesive 13 attached to the first sheet 8, and disposed between the plurality of second sheets 9', and thus disposed between the removable portions 14 of the first sheet 8, to come in direct contact with and permanently adhere to the medicament retaining sheet 6 permanently attached to the blister card 1 as shown in Figure 12.

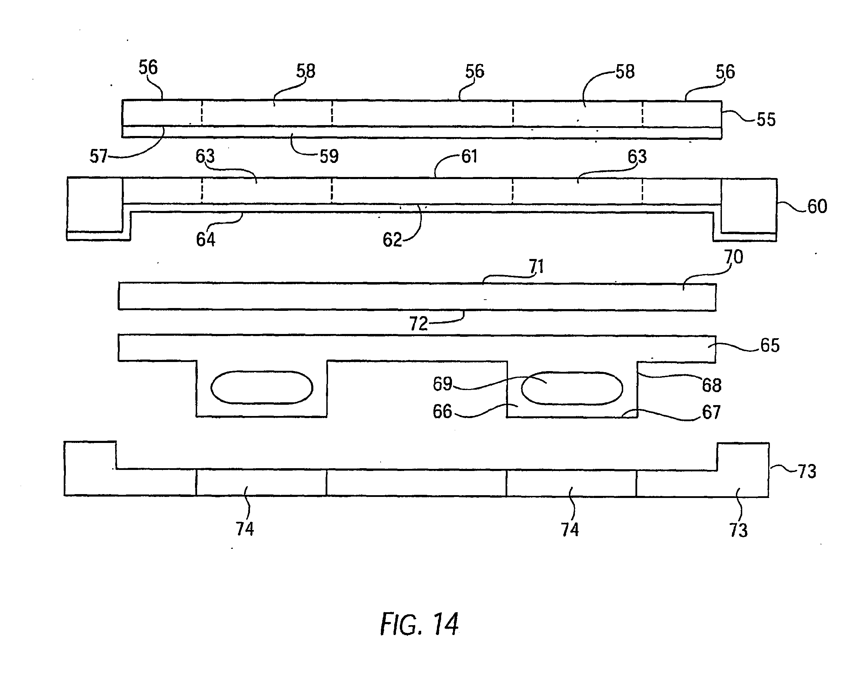

The permanent adhesive 13' disposed between the second sheets 19' has the effect of isolating each removable label 14 so that pulling on the tab of each label will remove only one label at a time. In addition, in this embodiment each removable portion 14 is provided with a tab 50 to facilitate selective removal of each of the removable portions 14. Each removable portion 14 may also be provided with means, e.g., perforations 51 and/or slits 52 cut into the removable portion 14 to facilitate selective removal of each removable portion 14 and to help isolate each removable portion 14 to permit selective removal of each removable portion 14 without inadvertently removing any other removable portion 14. Figure 12 shows a blister card 1 containing a medicament 5. The medicament 5 is held in place by a medicament retaining sheet 6. The label form is removed from the carrying sheet 10 and is attached to the medicament retaining sheet 6. The portion of the permanent adhesive 13 that surrounds or borders the first sheet permanently adheres the border of the label form to the medicament retaining sheet 6. The removable portions 14 of the first sheet 8 are in registry with the medicament compartments 2 of the blister card 1. Each of the plurality of second sheets 9' is in registry with the removable portions 14 of the first sheet 8. When the label form is applied to the blister card 1, the blister card 1 is resistant to tampering by children because the medicament retaining sheet 6, the second sheets 9', and the first sheet 8 cooperate to provide greater resistance to a child attempting to push the medicament 5 through the three layers 8, 9', and 6. Although resistant to tampering by children, the blister card 1 is also senior friendly because an adult would first remove the removable portion 14 of the first sheet 8 as shown in Figure 10. Removing the removable portion 14 of the first sheet 8 also removes the portions of the second sheets 9' that are permanently attached to the permanent adhesive 13 on the second major surface 12 of the first sheet 8. Thus, only the medicament retaining sheet 6 prevents the medicament 5 from being removed from the medicament compartment 2 as shown in Figure 10 and as previously discussed. The user then pushes the medicament 5 through the medicament retaining sheet 6 as shown in Figure 11 and as previously discussed. Figures 14 to 16 show another embodiment. Figure 14 is an exploded view of a child resistant/senior friendly blister card, comprising a first sheet 55 having a first major surface 56 and a second major surface 57 and a plurality of selectively removable portions 58. The second major surface 57 is provided with a temporary adhesive 59. A second sheet 60 has a first major surface 61 and a second major surface 62 and a plurality of removable portions 63. The first major surface 61 of the second sheet 60 is attached to the second major surface 57 of the first sheet 55. The second major surface 62 of the second sheet 60 is provided with a permanent adhesive 64. A blister package 65 has a plurality of medicament compartments 66 with each of the plurality of compartments 66 having a closed bottom end 67 and an open top end 68 for receiving a medicament 69. A medicament containment sheet 70 has a first major surface 71 and a second major surface 72. The second major surface 72 of the containment sheet 70 is attached to the blister card 65 and the first major surface 71 of the containment sheet 70 is attached to the permanent adhesive 64 on the second major surface 62 of the second sheet 60. The removable portions 58 of the first sheet 55 are in registry with the open top ends 68 of the medicament compartments 66. The temporary adhesive 59 on the second major surface 57 of the first sheet 55 has an adhesive strength that is sufficient to adhere the first sheet 55 to the first major surface 61 of the second sheet 60 and an adhesive strength that allows the selectively removable portions 58 of the first sheet 55 to be removed from the second sheet 60 without removing the selectively removable portions 63 of the second sheet 60 to which the first sheet 55 is attached.

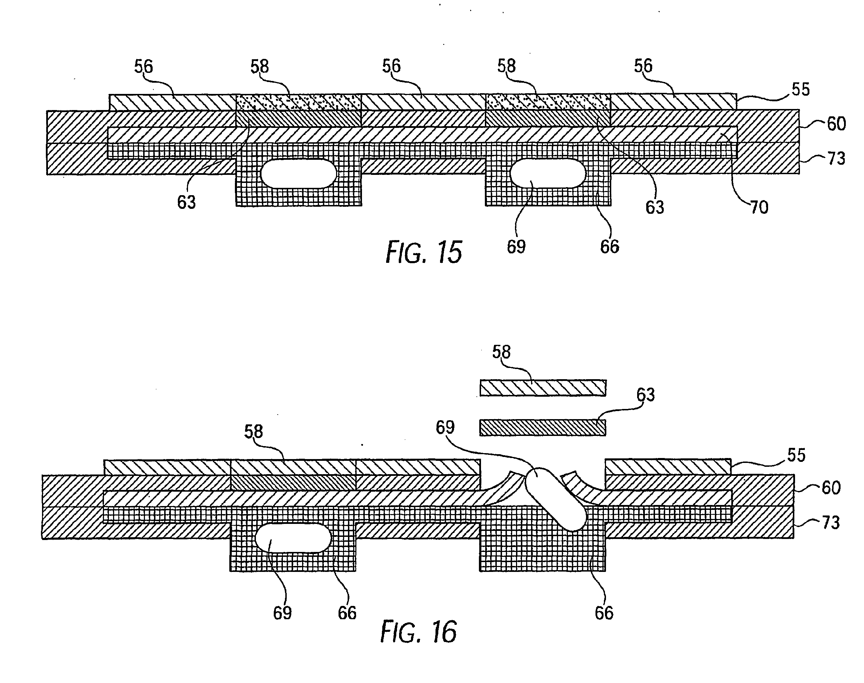

In a preferred embodiment, a third sheet 73 may be provided to impart stability. The third sheet 73 is provided with a plurality of apertures 74 sized and aligned to receive the medicament compartments 66. The second sheet 60 and third sheet 73 may be two separate sheets as shown in Figure 14. Alternatively, the second sheet 60 and the third sheet 73 may be hingedly connected in a clam shell configuration. Figure 15 shows the components of Figure 15 after they have been assembled. Figure 16 shows a medicament being dispensed from the assembled blister card of Figure 15. In a preferred embodiment, the first sheet is comprised of paper or a synthetic material. The second sheet is preferably a synthetic material. The blister card may also be provided with means to facilitate selective removal of the removable portions of the first sheet (e.g., a tab attached to each removable portion).

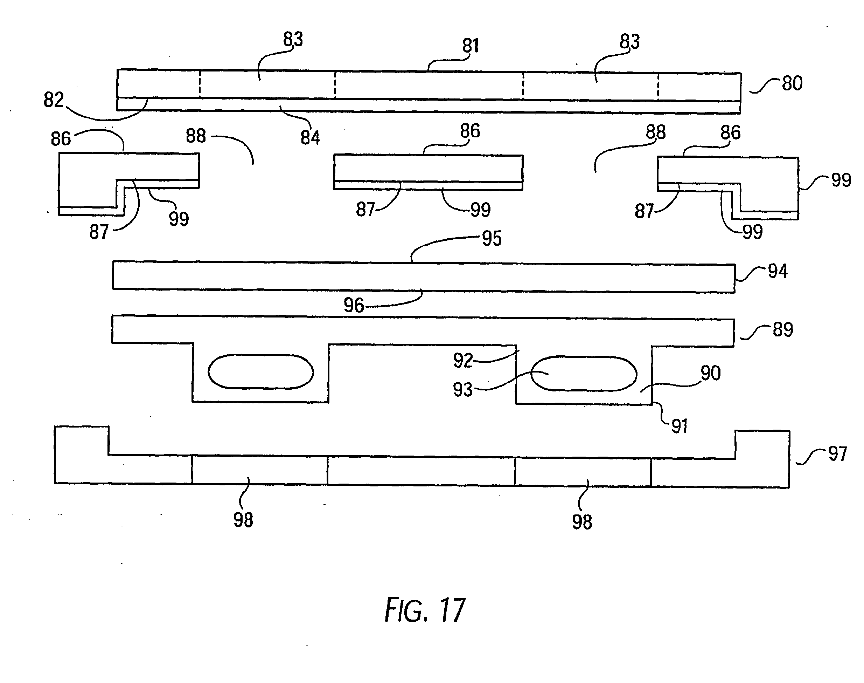

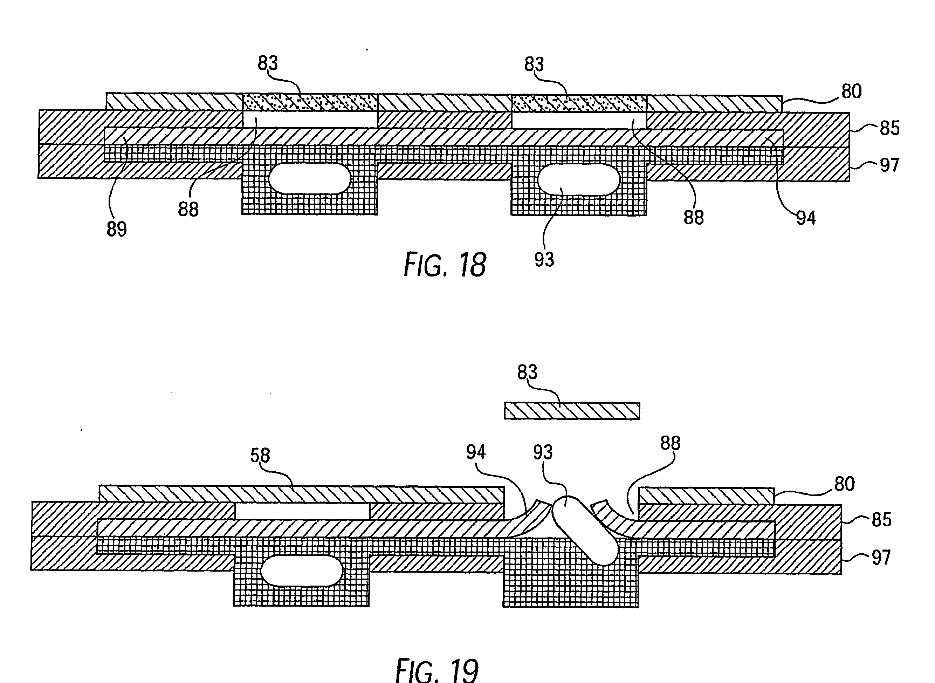

In a preferred embodiment the means is selected from the group consisting of slits, notches, and perforations. The medicament containing sheet may be transparent or opaque and in a preferred embodiment is comprised of a metal foil. Figures 17 to 19 to show yet another embodiment of a child resistant/senior friendly blister card. Figure 17 is an exploded view and shows a first sheet 80 having a first major surface 81 and a second major surface 82 and a plurality of selectively removable portions 83. The second major surface 82 is provided with a temporary adhesive 84. A second sheet 85 has a first major surface 86 and a second major surface 87 and is provided with a plurality of apertures 88. The first major surface 86 of the second sheet 85 is attached to the second major surface 82 of the first sheet 80. The second major surface 87 of the second sheet 85 is provided with a permanent adhesive 99. A blister package 89 has a plurality of medicament compartments 90 with each of the plurality of compartments 90 having a closed bottom end 91 and an open top end 92 for receiving a medicament 93. A medicament containment sheet 94 has a first major surface 95 and a second major surface 96. The second major surface 96 of the containment sheet 94 is attached to the blister card 89 and the first major surface 95 of the containment sheet 94 is attached to the permanent adhesive 99 on the second major surface 87 of the second sheet85. The removable portions 83 of the first sheet 80 are in registry with the open top ends 92 of the medicament compartments 90 and are also in registry with the apertures 88 in the second sheet 85. The temporary adhesive 84 on the second major surface 82 of the first sheet 80 has an adhesive strength that is sufficient to adhere the first sheet 80 to the first major surface 86 of the second sheet 85 and adhere the first sheet 80 to the first major surface 95 of the medicament containment sheet 94, and an adhesive strength that allows the selectively removable portions 83 in the first sheet 80 to be removed without removing the portions of the medicament containment sheet 94 covering the open top end 92 of the medicament compartment 90 to which the first sheet 80 is attached. In a preferred embodiment, a third sheet 97 may be provided to impart stability. The third sheet 97 is provided with a plurality of apertures 98 sized and aligned to receive the medicament compartments 90. The second sheet 85 and third sheet 97 may be two separate sheets as shown in Figure 17. Alternatively, the second sheet 85 and the third sheet 97 may be hingedly connected in a clam shell configuration. Figure 18 shows the components of Figure 17 after they have been assembled. Figure 19 shows a medicament 93 being dispensed from the assembled blister card of Figure 18.

In a preferred embodiment, the first sheet is comprised of paper or a synthetic material. The second sheet is preferably a synthetic material. The blister card may also be provided with means to facilitate selective removal of the removable portions of the first sheet (e.g., a tab attached to each removable portion). In a preferred embodiment the means is selected from the group consisting of slits, notches, and perforations. The medicament containing sheet may be transparent or opaque and in a preferred embodiment is comprised of a metal foil.

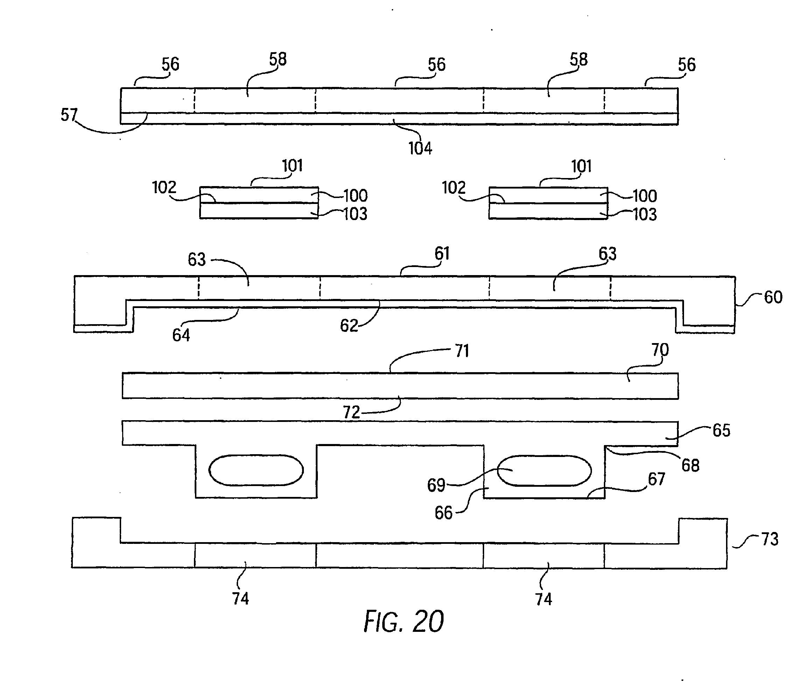

Figure 20 shows an especially preferred alternative embodiment of the embodiment shown in Figure 14 in which a film material 100, preferably clear, is disposed between the first sheet 55 and the second sheet 60. The film material 100, preferably a clear sheet, has a first major surface 101 and a second major surface 102. A removable adhesive 103 is applied to the second major surface 102 of the film material 100. In this embodiment, the second major surface 57 of the first sheet 55 is provided with a permanent adhesive 104. Figure 20 is an exploded view of a child resistant/senior friendly blister card, comprising a first sheet 55 having a first major surface 56 and a second major surface 57 and a plurality of selectively removable portions 58. The second major surface 57 is provided with a permanent adhesive 104. A second sheet 60 has a first major surface 61 and a second major surface 62 and a plurality of removable portions 63. A film material 100 is disposed between the first sheet 55 and the second sheet 60. The film material 100, preferably a clear sheet, has a first major surface 101 and a second major surface 102. A removable adhesive 103 is applied to the second major surface 102 of the film material 100. In a preferred embodiment the film material 100 does not cover the entire second major surface 57 of the first sheet 55. In an especially preferred embodiment, the first and second major surfaces 101 and 102 of the film material 100 have an area that is smaller than the area of the second major surface 57 of the first sheet 55 and the sheet material 100 is sized and disposed so as to leave a border of uncovered permanent adhesive 104 around the border of the second major surface 57 of the first sheet 55. This permits a portion of the first sheet 55 to be permanently adhered to the first major surface 61 of the second sheet 60.

The first major surface 61 of the second sheet 60 is attached to the second major surface 102 of the film material 100. The second major surface 62 of the second sheet 60 is provided with a permanent adhesive 64. A blister package 65 has a plurality of medicament compartments 66 with each of the plurality of compartments 66 having a closed bottom end 67 and an open top end 68 for receiving a medicament 69. A medicament containment sheet 70 has a first major surface 71 and a second major surface 72. The second major surface 72 of the containment sheet 70 is attached to the blister card 65 and the first major surface 71 of the containment sheet 70 is attached to the permanent adhesive 64 on the second major surface 62 of the second sheet 60. The removable portions 58 of the first sheet 55 are in registry with the open top ends 68 of the medicament compartments 66. The temporary or removable adhesive 103 on the second major surface 102 of the film material 100 has an adhesive strength that is sufficient to adhere the first sheet 55 to the first major surface 61 of the second sheet 60 and an adhesive strength that allows the selectively removable portions 58 of the first sheet 55 to be removed from the second sheet 60 without removing the selectively removable portions 63 of the second sheet 60 to which the first sheet 55 is attached. In a preferred embodiment, a third sheet 73 may be provided to impart stability. The third sheet 73 is provided with a plurality of apertures 74 sized and aligned to receive the medicament compartments 66. The second sheet 60 and third sheet 73 may be two separate sheets as shown in Figure 14. Alternatively, the second sheet 60 and the third sheet 73 may be hingedly connected in a clam shell configuration.

In a preferred embodiment, the first sheet is comprised of paper or a synthetic material..The second sheet is preferably a synthetic material. The blister card may also be provided with means to facilitate selective removal of the removable portions of the first sheet (e.g., a tab attached to each removable portion). In a preferred embodiment the means is selected from the group consisting of slits, notches, and perforations. The medicament containing sheet may be transparent or opaque and in a preferred embodiment is comprised of a metal foil.

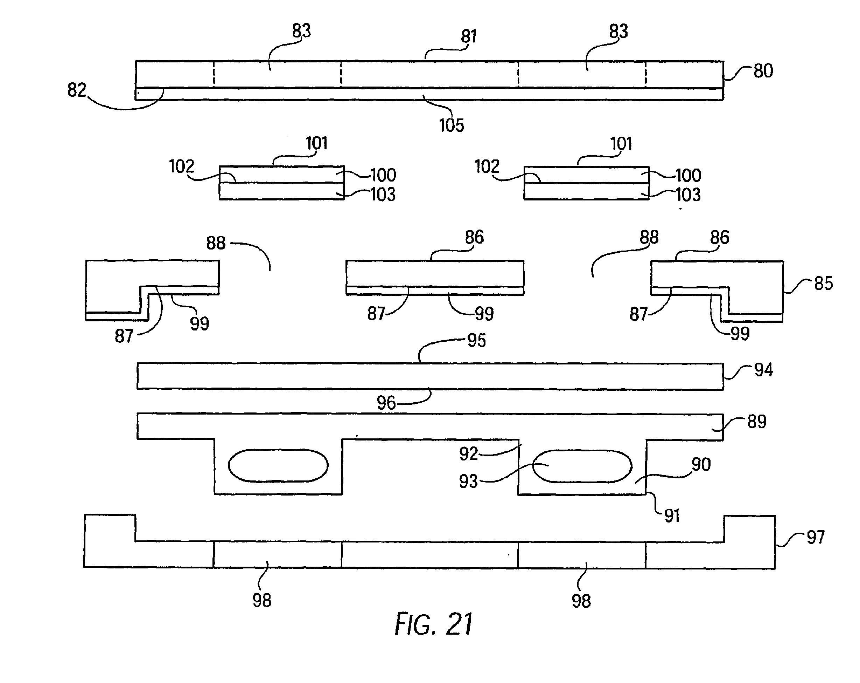

Figure 21 shows another especially preferred alternative embodiment of the embodiment shown in Figure 17 in which a film material 100, preferably clear, is disposed between the first sheet and the second sheet. The film material 100, preferably a clear sheet, has a first major surface 101 and a second major surface 102. A removable adhesive 103 is applied to the second major surface 102 of the film material 100. In this embodiment, the second major surface 82 of the first sheet 80 is provided with a permanent adhesive 105.

Figure 21 is an exploded view and shows a first sheet 80 having a first major surface 81 and a second major surface 82 and a plurality of selectively removable portions 83. The second major surface 82 is provided with apermanent adhesive 105. A second sheet 85 has a first major surface 86 and a second major surface 87 and is provided with a plurality of apertures 88. A film material 100, preferably clear, is disposed between the first sheet 80 and the second sheet 85. The film material 100, preferably a clear sheet, has a first major surface 101 and a second major surface 102. A removable or temporary adhesive 103 is applied to the second major surface 102 of the film material 100. In a preferred embodiment the film material 100 does not cover the entire second major surface 82 of the first sheet 80. In an especially preferred embodiment, the first and second major surfaces 101 and 102 of the film material 100 have an area that is smaller than the area of the second major surface 82 of the first sheet 80 and the sheet material 100 is sized and disposed so as to leave a border of uncovered permanent adhesive 104 around the border of the second major surface 82 of the first sheet 80. This permits a portion of the first sheet 80 to be permanently adhered to the first major surface 86 of the second sheet 85.

The first major surface 86 of the second sheet 85 is attached to the second major surface 102 of the film material 100. The first major surface 86 of the second sheet 85 is attached to the second major surface 82 of the first sheet 80.

The second major surface 87 of the second sheet 85 is provided with a permanent adhesive 99. A blister package 89 has a plurality of medicament compartments 90 with each of the plurality of compartments 90 having a closed bottom end 91 and an open top end 92 for receiving a medicament 93. A medicament containment sheet 94 has a first major surface 95 and a second major surface 96. The second major surface 96 of the containment sheet 94 is attached to the blister card 89 and the first major surface 95 of the containment sheet 94 is attached to the permanent adhesive 99 on the second major surface 87 of the second sheet 85. The removable portions 83 of the first sheet 80 are in registry with the open top ends 92 of the medicament compartments 90 and are also in registry with the apertures 88 in the second sheet 85. The temporary or removable adhesive 103 on the second major surface 102 of the film material 100 has an adhesive strength that is sufficient to adhere the first sheet 80 to the first major surface 86 of the second sheet 85 and adhere the first sheet 80 to the first major surface 95 of the medicament containment sheet 94, and an adhesive strength that allows the selectively removable portions 83 in the first sheet 80 to be removed without removing the portions of the medicament containment sheet 94 covering the open top end 92 of the medicament compartment 90 to which the first sheet 80 is attached. In a preferred embodiment, a third sheet 97 may be provided to impart stability. The third sheet 97 is provided with a plurality of apertures 98 sized and aligned to receive the medicament compartments 90. The second sheet 85 and third sheet 97 may be two separate sheets or, alternatively, the second sheet 85 and the third sheet 97 may be hingedly connected in a clam shell configuration as previously discussed.

In a preferred embodiment, the first sheet is comprised of paper or a synthetic material. The second sheet is preferably a synthetic material. The blister card may also be provided with means to facilitate selective removal of the removable portions of the first sheet (e.g., a tab attached to each removable portion). In a preferred embodiment the means is selected from the group consisting of slits, notches, and perforations. The medicament containing sheet may be transparent or opaque and in a preferred embodiment is comprised of a metal foil.

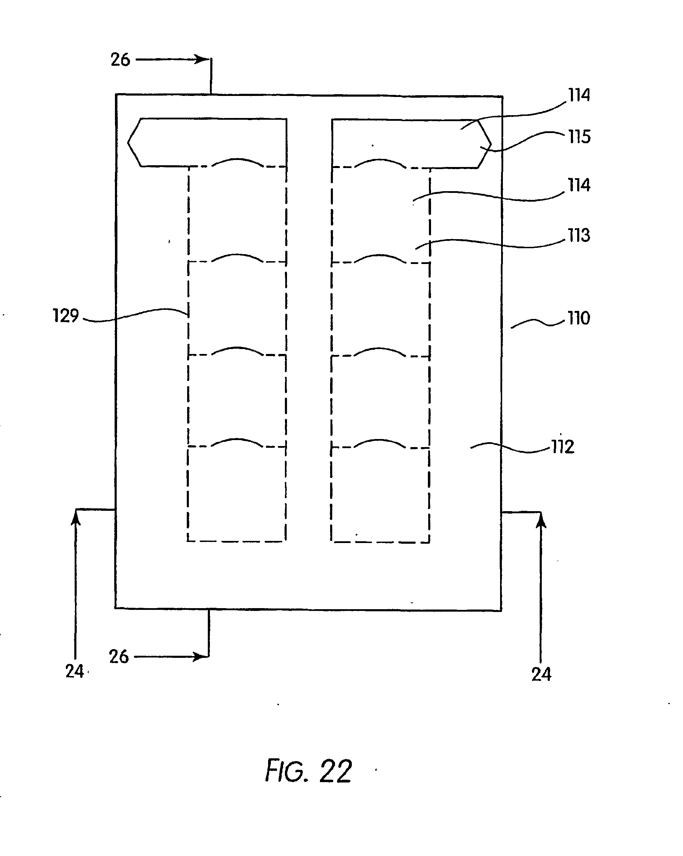

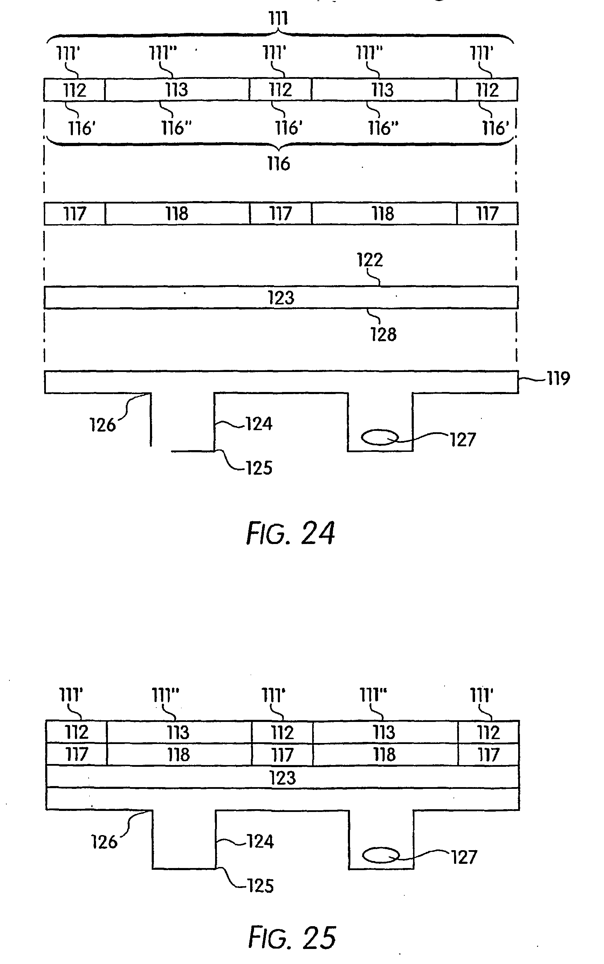

Figures 22 to 27 show an embodiment of the invention. Figure 22 is a top view of an embodiment of a first sheet 110 constructed in accordance with the invention. As shown best in Figure 24, the label 110 has a first major surface 111. The label 110 may optionally be provided with non-removable portions 112 having a first major surface 111', and removable portions 113 having a first major surface 111". The first major surface 111" of removable portions 113 may optionally be provided with identification indicia 114. A removable label facilitation tab 115 may be provided to facilitate access to the removable portions 113 of the label 110. The tab 115 may also be provided with indicia 114.

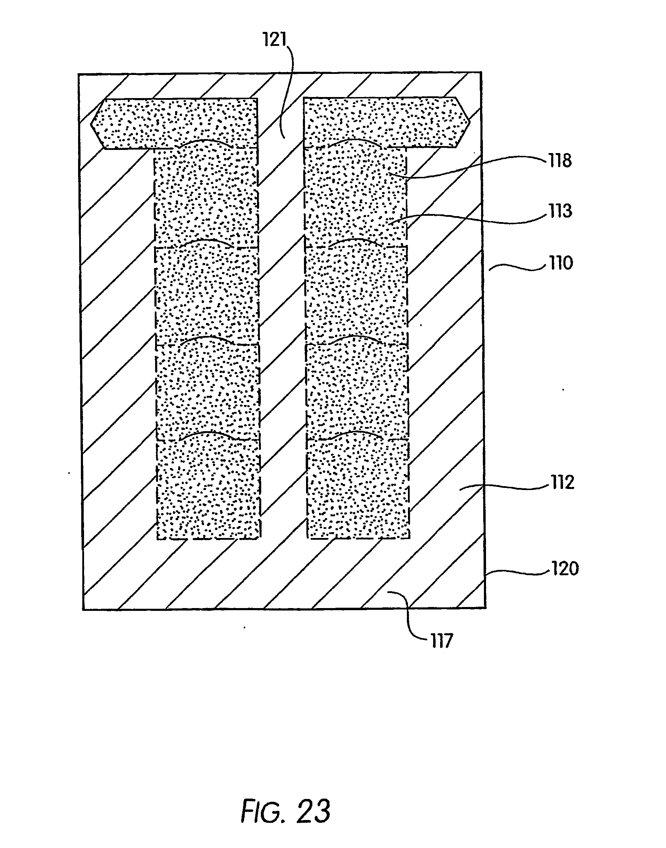

Figure 23 is a bottom view of the label 110 shown in Figure 22 and shows the second major surface 116 of the label or first sheet 110, non-removable portions 112 having a second major surface 116', and removable portions 113 having a second major surface 116". As discussed in more detail below, the second major surface 116' of the non-removable portions 112 is provided with a directly applied permanent adhesive 117 and the second major surface 116" of the removable portions 113 is provided with a directly applied temporary or removable adhesive 118. The label 110 shown in Figures 22 and 23 may be applied to a blister package 119 as discussed below and as shown in Figures 24 to 27.

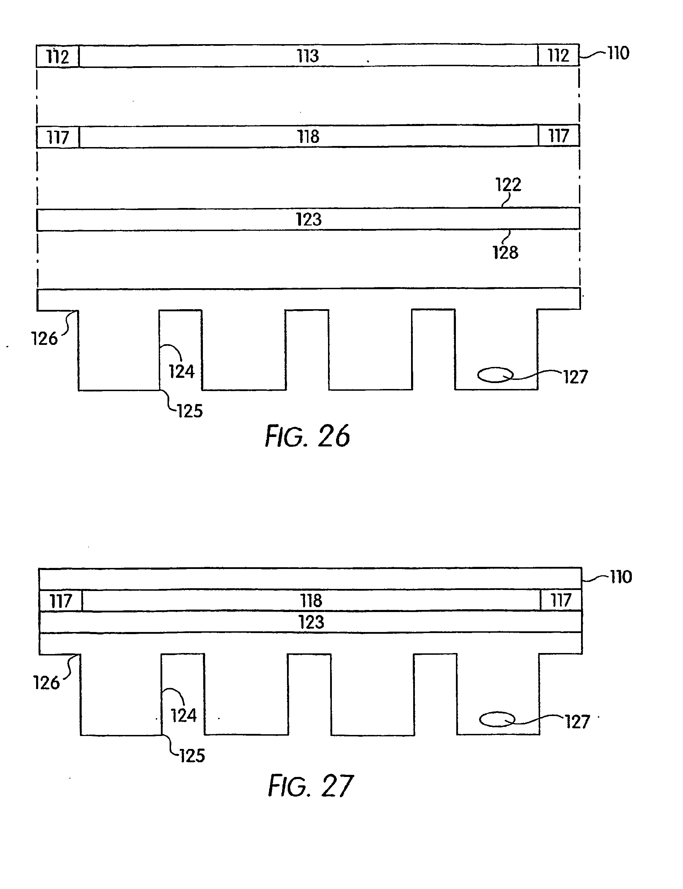

Figure 24 is an exploded end-view of the components of a blister package constructed in accordance with the invention taken along line 24 - 24 of Figure 22. Figure 25 shows the components shown in Figure 24 after they have been assembled. Figure 26 is an exploded side-view taken along line 26 - 26 of Figure 22. Figure 27 shows the components shown in Figure 26 after they have been assembled. As shown in Figures 22 to 27, the first sheet 110 is provided with a first major surface 111 and a second major surface 116 and a plurality of selectively removable portions 113. The second major surface 116' of the non-removable portions 112 is provided with a permanent adhesive 117. A removable or temporary adhesive 118 is applied to the second major surface 116" of the removable portions 113 of the label 110. In an especially preferred embodiment, the permanent adhesive 117 is disposed so as to leave a perimeter or border 120 of permanent adhesive 117 around the border of the second major surface 116 of the sheet 110, and optionally, also along the longitudinal midline 121 of the second major surface 116 of the first sheet 110 to define a non-removable second surface 116' of the first sheet 110 as shown best in Figure 23. This permits a portion of the second major surface 116 of the first sheet 110 to be permanently adhered to the first major surface 122 of the medicament containment sheet 123. The temporary adhesive 118 is disposed between the permanent adhesive 117 disposed on the border 120 and the longitudinal midline 121 of the second major surface of the sheet 110. A blister package 119 has a plurality of medicament compartments 124 with each of the plurality of compartments 124 having a closed bottom end 125 and an open top end 126 for receiving a medicament 127. A medicament containment sheet 123 has a first major surface 122 and a second major surface 128. Portions of the second major surface 128 of the containment sheet 123 are attached to the blister package 119 and the first major surface 122 of the containment sheet 123 is permanently attached to the permanent adhesive 117 on the second major surface 116' of the first sheet 110. The removable portions 113 of the first sheet 110 are in registry with the open top ends 126 of the medicament compartments 124. The temporary or removable adhesive 118 on the second major surface 116" of the first sheet 110 has an adhesive strength that is sufficient to temporarily adhere the second major surface 116" of the first sheet 110 to the first major surface 122 of the medicament containment sheet 123, and an adhesive strength that allows the selectively removable portions 113 in the first sheet 110 to be removed without removing the portions of the medicament containment sheet 123 covering the open top end 126 of the medicament compartment 124 to which the second major surfaces 116" of the removable portions 113 of the first sheet 110 are attached.

In a preferred embodiment, the first sheet 110 is comprised of paper or a synthetic material that is suitable for being provided with at least one, and preferably a plurality, of selectively removable portions 113 utilizing means well known to those skilled in the art. The first sheet 110 may also be provided with means 129 to facilitate selective removal of the removable portions 113 of the first sheet 110 (e.g., a tab attached to each removable portion). In a preferred embodiment the means 129 is selected from the group consisting of slits, notches, and perforations. The medicament containment sheet 123 may be transparent or opaque and in a preferred embodiment is comprised of a metal foil.

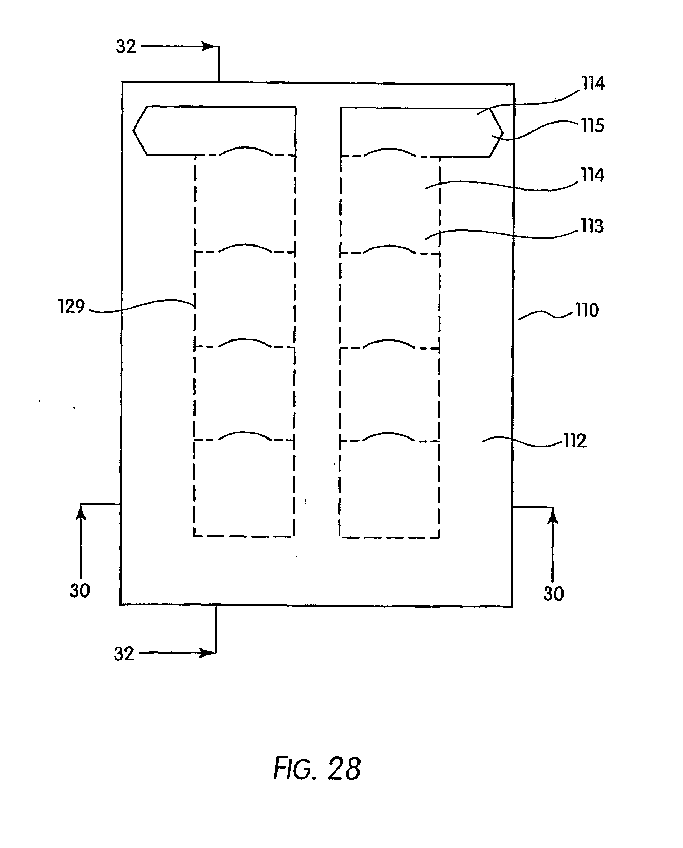

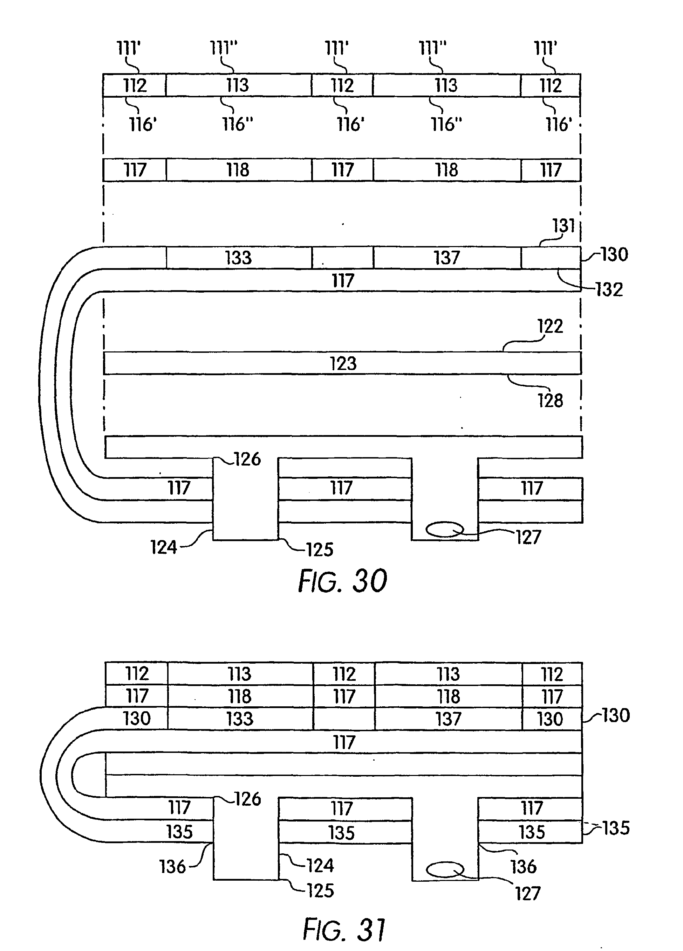

Figures 28 to 33 show yet another preferred alternative embodiment of the invention. Figure 28 is a top view of a preferred embodiment of a first sheet 110 constructed in accordance with the invention. As shown best in Figure 30, the label 110 has a first major surface 111. The label 110 may optionally be provided with non-removable portions 112 having a first major surface 111', and removable portions 113 having a first major surface 111". The first major surface 111" of removable portions 113 may optionally be provided with identification indicia 114. A removable label facilitation tab 115 may be provided to facilitate access to the removable portions 113 of the label or first sheet 110 and may also be provided with indicia 114.

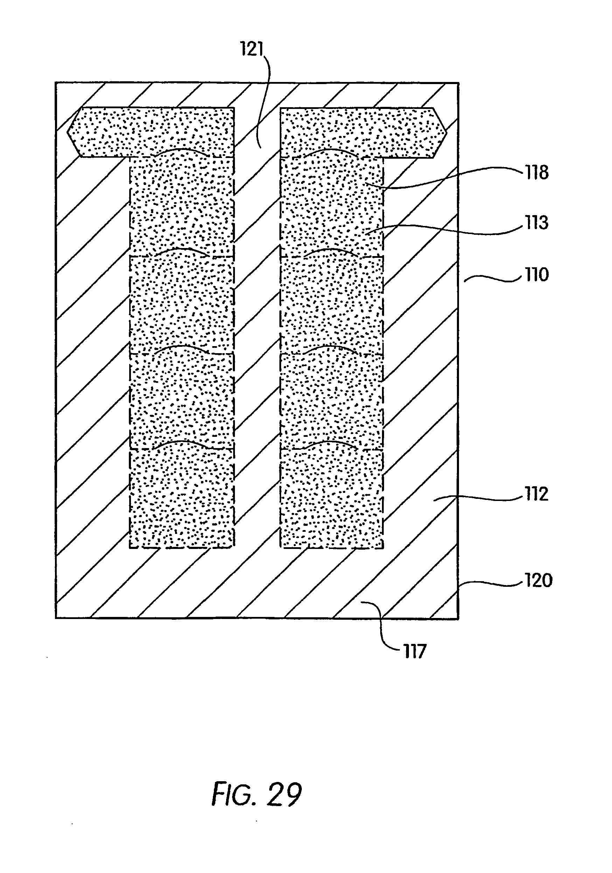

Figure 29 is a bottom view of the label 110 shown in Figure 28 and shows the second major surface 116 of the label or first sheet 110, non-removable portions 112 having a second major surface 116', and removable portions 113 having a second major surface 116". As discussed in more detail below, the second major surface 116' of the non-removable portions 112 is provided with a directly applied permanent adhesive 117 and the second major surface 116" of the removable portions 113 is provided with a directly applied temporary or removable adhesive 118. The label 110 shown in Figures 28 and 29 may be applied to a blister package 119 as discussed below and as shown in Figures 30 to 33.

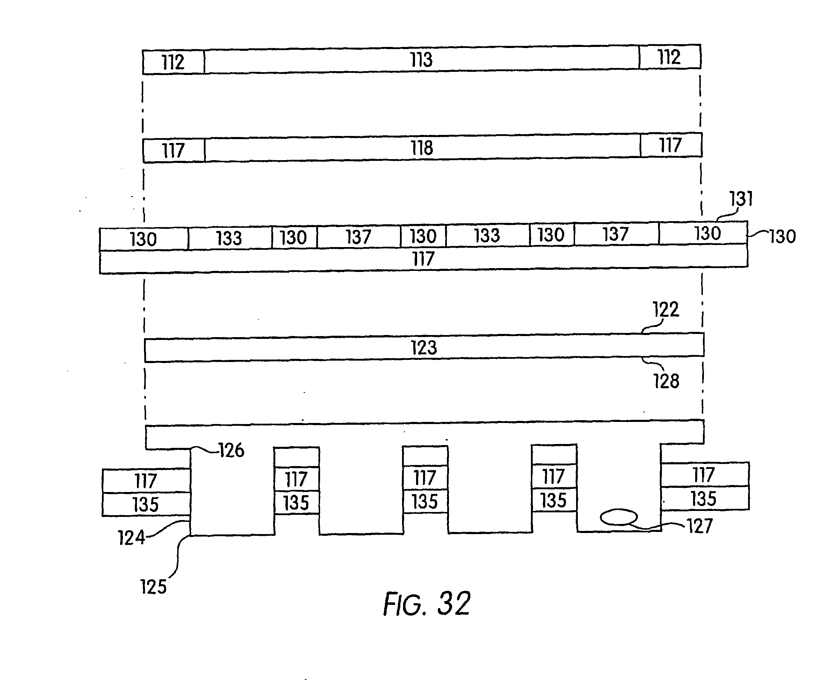

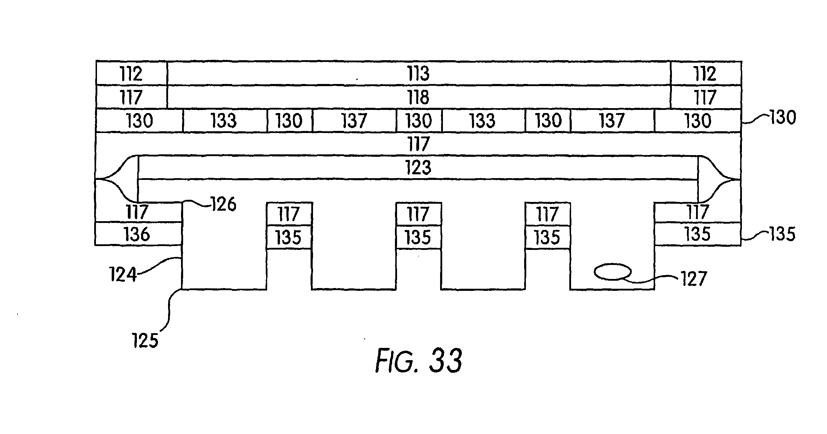

Figure 30 is an exploded end-view of the components of a blister card constructed in accordance with the invention taken along line 30 - 30 of Figure 28. Figure 31 shows the components shown in Figure 30 after they have been assembled. Figure 32 is an exploded side-view taken along line 32 - 32 of Figure 28. Figure 33 shows the components shown in Figure 32 after they have been assembled. As shown in Figures 28 - 33, the first sheet 110 is provided with a first major surface 111 and a second major surface 116 and a plurality of selectively removable portions 113. The second major surface 116' of the non-removable portions 112 is provided with a permanent adhesive 117. A removable or temporary adhesive 118 is applied to the second major surface 116" of the removable portions 113 of the label 110. In an especially preferred embodiment, the permanent adhesive 117 is disposed so as to leave a border 120 of permanent adhesive 117 around the border 120 of the second major surface 116 of sheet 110 to define a non-removable second surface 116' of the first sheet 110, and optionally, also along the longitudinal midline 121 of the second major surface 116 of the first sheet 110 as shown best in Figure 29. The temporary adhesive 118 is disposed between the portions of the permanent adhesive 117 disposed on the border 120 and the longitudinal midline 121 of the second major surface of the sheet 110. A second sheet or card 130 may be utilized to impart additional stiffening or rigidity and has a first major surface 131 and a second major surface 132 and may be provided with a plurality of apertures 133. These apertures 133 may be left open or may be provided with removable portions 137 to impart additional safety to the packaging by requiring an additional step, i.e., the removal of the removable portions 137 in order to have access to the medicament 127. The removable portions 137 may be removed by pushing the medicament against the second major surface 132 of the removable portions 137 as previously discussed. For the purposes of ease of illustration, the second sheet 130 is shown as having both open apertures 133 and removable portions 137 blocking or plugging some of the apertures 133. In a preferred embodiment, sheet 130 would be provided with either all open apertures 133 or with removable portions 137 blocking or plugging all of the apertures 133 as specific medicament dispensing applications dictate.

The first major surface 131 of the second sheet 130 is permanently attached to the second major surface 116' of the first sheet 110 and in an especially preferred embodiment is attached to the permanent adhesive 117 disposed around the border 120 and the longitudinal midline 121. The second major surface 132 of the second sheet 130 is provided with a permanent adhesive 117. This permits a portion of the second sheet 130 to be permanently adhered to the first major surface 122 of the medicament containing sheet 123. A blister package 119 has a plurality of medicament compartments 124 with each of the plurality of compartments 124 having a closed bottom end 125 and an open top end 126 for receiving a medicament 127. A medicament containment sheet 123 has a first major surface 122 and a second major surface 128. The second major surface 128 of the containment sheet 123 is attached to the blister package 119 and the first major surface 122 of the containment sheet 123 is attached to the permanent adhesive 117 on the second major surface 132 of the second sheet 130. The removable portions 113 of the first sheet 110 are in registry with the open top ends 126 of the medicament compartments 124 and are also in registry with the apertures 133 or removable portions 137 in the second sheet 130. The temporary or removable adhesive 118 on the second major surface 116" of the first sheet 110 has an adhesive strength that is sufficient to temporarily adhere the second major surface 116" of the first sheet 110 to the first major surface 131 of the second sheet 130, and an adhesive strength that allows the selectively removable portions 113 in the first sheet 110 to be removed without removing the removable portions 134, if present, of the second sheet 130 attached to the medicament containment sheet plugging the apertures 133 in the second sheet 130. In the embodiment in which the apertures 133 are not provided with removable portions 137 plugging the apertures 133, the removable adhesive 118 on the second major surface 116" of the removable portions 113 may protrude through aperture 133 and may contact and be temporarily attached to the first major surface 122 of the medicament containment sheet. The removable adhesive 118 has an adhesive strength that allows the removable portions 113 to be selectively removed from the first major surface 122 of the medicament containment sheet 123 without removing any portion of the medicament containment sheet 123 covering the open top end 126 of the medicament compartment 124.

In a preferred embodiment, a third sheet or card 135 may be provided to impart stability. The third sheet 135 is provided with a plurality of apertures 136 sized and aligned to receive the medicament compartments 124. The second sheet 130 and third sheet 135 may be two separate sheets or, alternatively, the second sheet 130 and the third sheet 135 may be hingedly connected in a clam shell configuration as previously discussed.

In a preferred embodiment, the first sheet is comprised of paper or a synthetic material that is suitable for being provided with at least one, and preferably a plurality, of selectively removable portions 113. The blister card may also be provided with means to facilitate selective removal of the removable portions of the first sheet (e.g., a tab attached to each removable portion). In a preferred embodiment the means is selected from the group consisting of slits, notches, and perforations. The medicament containing sheet may be transparent or opaque and in a preferred embodiment is comprised of a metal foil.

## Claims

1. A child resistant and senior friendly blister package comprising:
(a) a first sheet (110) having a first major surface (111) and a second major surface (116) and a plurality of selectively removable portions (113), the second major surface (116") of the removable portions (113) provided with a directly applied temporary adhesive (118), and the second major surface (116') of the non-removable portions(112) provided with a directly applied permanent adhesive (117);
(b) a blister package (119) having a plurality of medicament compartments (124), each of the plurality of compartments (124) having a closed bottom end (125) and an open top end (126) for receiving a medicament (127);
(c) a medicament containment sheet (123) having a first major surface (122) and a second major surface (128), the second major surface (128) of the containment sheet (123) attached to the blister package (119) and the first major surface (122) of the containment sheet (123) permanently attached to the permanent adhesive (117) on the second major surface (116') of the first sheet (110);
(d) wherein the removable portions (113) of the first sheet (110) are in registry with the open top ends (126) of the medicament compartments (124), and wherein the temporary adhesive (118) on the second major surface (116") of the removable portions (113) on the first sheet (110) has an adhesive strength that is sufficient to temporarily adhere the second major surface (116") of the removable portions (134) of the first sheet (110) to the first major surface (122) of the medicament containment sheet (123), and an adhesive strength that allows the selectively removable portions (113) of the first sheet (110) to be removed without removing the portions of the medicament containment sheet (123) covering the open top ends (126) of the medicament compartments (124) to which the removable portions (113) of first sheet (110) are attached.

2. A child resistant and senior friendly blister package as claimed in claim 1, further comprising:
(e) a second sheet (130) having a first major surface (131) and a second major surface (132) and a plurality of removable portions (137), the second sheet (130) interposed between the first sheet (110) and the medicament containment sheet (123), the first major surface (131) of the second sheet (130) attached to the second major surface (116) of the first sheet (110), the second major surface of (132) the second sheet (130) provided with a permanent adhesive (117);
(f) portions of the first major surface (122) of the medicament containment (123) sheet are permanently attached to the permanent adhesive (117) on the second major surface (132) of the second sheet (130); and
(g) wherein the removable portions (113) of the first sheet (110) are in registry with the open top ends (126) of the medicament compartments (124) and with the removable portions (137) of the second sheet (130), and wherein the permanent adhesive (117) on the second major surface (116') of the first sheet (110) has an adhesive strength that is sufficient to permanently adhere the first sheet (110) to the first major surface (131) of the second sheet (130) and wherein the temporary adhesive (118) on the second major surface (116") of the removable portions (113) of the first sheet (110) has an adhesive strength that allows the selectively removable portions (113) of the first sheet (110) to be removed from the second sheet (130) without removing the selectively removable portions (137) of the second sheet (130) to which the first sheet (110) is attached.

3. A child resistant and senior friendly blister package as claimed in claim 1, further comprising:
(e) a second sheet (130) having a first major surface (131) and a second major surface (132) and provided with a plurality of apertures (133), the second sheet (130) interposed between the first sheet (110) and the medicament containment sheet (133), the first major surface (131) of the second sheet (130) attached to the second major surface (116) of the first sheet (110), the second major surface (132) of the second sheet (130) provided with a permanent adhesive (117);
(f) portion of the first major surface (122) of the medicament containment sheet (123) are attached to the permanent adhesive (117) on the second major surface (132) of the second sheet (130); and
(g) wherein the removable portions (113) of the first sheet (110) are in registry with the open top ends (126) of the medicament compartments (124) and also in registry with the apertures (133) in the second sheet (130), and wherein the permanent adhesive (117) disposed on the second major surface (116') of the first sheet (110) has an adhesive strength that is sufficient to permanently adhere the first sheet (110) to the first major surface (131) of the second sheet, and wherein the temporary adhesive (118) disposed on the second major surface (116") of the removable portions (113) has an adhesive strength that allows the selectively removable portions (113) of the first sheet (110) to be removed from the first sheet (110) without removing the portions of the medicament containment sheet (123) covering the open top ends (126) of the medicament compartments (124) to which the first sheet (110) is attached.

4. The blister package of any of claims 1-3, wherein the first sheet (110) is paper.

5. The blister package of any of claims 1-3, wherein the first sheet (110) is a synthetic material.

6. The blister package of claim 2 or claim 3, wherein the second sheet (130) is a synthetic material.

7. The blister package of any of claims 1-3, further comprising removal facilitation notches to facilitate the selective removal of the removable portions (113) of the first sheet (110).

8. The blister package of any of claims 1-3, wherein the medicament containing sheet (123) is transparent.

9. The blister package of any of claims 1-3, further comprising a tab (115) attached to each removable portion (113).

10. The blister package of claim 9, further comprising means (129) to facilitate selective removable of the removable portions (113).

11. The blister package of claim 10, wherein the means (129) is selected from the group consisting of slits and perforations.

## Patentansprüche

1. Kindersichere und seniorenfreundliche Blisterverpackung, die folgendes aufweist:
(a) einen ersten Bogen (110) mit einer ersten Hauptfläche (111) und einer zweiten Hauptfläche (116) und einer Vielzahl von selektiv abtrennbaren Abschnitten (113), wobei die zweite Hauptfläche (116") der abtrennbaren Abschnitte (113) mit einem direkt aufgetragenen temporären Klebstoff (118) versehen ist, und wobei die zweite Hauptfläche (116') der nichtabtrennbaren Abschnitte (112) einen direkt aufgetragenen permanenten Klebstoff (117) aufweist;
(b) eine Blister-Verpackung (119) mit einer Vielzahl von Medikamenten-Fächern (124), wobei jedes der Vielzahl von Fächern (124) ein geschlossenes unteres Ende (125) und ein offenes oberes Ende (126) zur Aufnahme eines Medikaments (127) aufweist;
(c) einen Medikamenten-Einschluss-Bogen (123) mit einer ersten Hauptfläche (122) und einer zweiten Hauptfläche (128), wobei die zweite Hauptfläche (128) des Einschluss-Bogens (123) an der Blister-Verpackung (119) befestigt ist und die erste Hauptfläche (122) des Einschluss-Bogens (123) permanent an dem permanenten Klebstoff (117) auf der zweiten Hauptfläche (116') des ersten Bogens (110) befestigt ist;
(d) wobei die abtrennbaren Abschnitte (113) des ersten Bogens (110) deckungsgleich mit den offenen oberen Enden (126) der Medikamenten-Fächer (124) sind, und wobei der temporäre Klebstoff (118) auf der zweiten Hauptfläche (116") der abtrennbaren Abschnitte (113) auf dem ersten Bogen (110) eine Haftfestigkeit aufweist, die ausreichend ist, um die zweite Hauptfläche (116") der abtrennbaren Abschnitte (134) des ersten Bogens (110) temporär an die erste Hauptfläche (122) des Medikamenten-Einschluss-Bogens (123) zu kleben, und eine Haftfestigkeit aufweist, die es den selektiv abtrennbaren Abschnitten (113) des ersten Bogens (110) ermöglicht, ohne Abtrennung der Abschnitte des Medikamenten-Einschluss-Bogens (123) abgetrennt zu werden, der die offenen oberen Enden (126) der Medikamenten-Fächer (124) abdeckt, an welchen die abtrennbaren Abschnitte (113) des ersten Bogens (110) befestigt sind.

2. Kindersichere und seniorenfreundliche Blisterverpackung nach Anspruch 1, die folgendes aufweist:
(e) einen zweiten Bogen (130) mit einer ersten Hauptfläche (131) und einer zweiten Hauptfläche (132) und einer Vielzahl von abtrennbaren Abschnitten (137), wobei sich der zweite Bogen (130) zwischen dem ersten Bogen (110) und dem Medikamenten-Einschluss-Bogen (123) befindet, wobei die erste Hauptfläche (131) des zweiten Bogens (130) an der zweiten Hauptfläche (116) des ersten Bogens (110) befestigt ist, und wobei die zweite Hauptfläche (132) des zweiten Bogens (130) mit einem permanenten Klebstoff (117) versehen ist;
(f) Abschnitte der ersten Hauptfläche (122) des Medikamenten-Einschluss-(123) Bogens, die permanent an dem permanenten Klebstoff (117) auf der zweiten Hauptfläche (132) des zweiten Bogens (130) befestigt sind; und
(g) wobei die abtrennbaren Abschnitte (113) des ersten Bogens (110) deckungsgleich mit den offenen oberen Enden (126) der Medikamenten-Fächer (124) und mit den abtrennbaren Abschnitten (137) des zweiten Bogens (130) sind, und wobei der permanente Klebstoff (117) auf der zweiten Hauptfläche (116') des ersten Bogens (110) eine Haftfestigkeit aufweist, die ausreichend ist, um den ersten Bogen (110) permanent an die erste Hauptfläche (131) des zweiten Bogens (130) zu kleben, und wobei der temporäre Klebstoff (118) auf der zweiten Hauptfläche (116") der abtrennbaren Abschnitte (113) des ersten Bogens (110) eine Haftfestigkeit aufweist, die es den selektiv abtrennbaren Abschnitten (113) des ersten Bogens (110) ermöglicht, ohne Abtrennung der selektiv abtrennbaren Abschnitte (137) des zweiten Bogens (130), an dem der erste Bogen (110) befestigt ist, von dem zweiten Bogen (130) abgetrennt zu werden.

3. Kindersichere und seniorenfreundliche Blisterverpackung nach Anspruch 1, die des Weiteren folgendes aufweist:
(e) einen zweiten Bogen (130) mit einer ersten Hauptfläche (131) und einer zweiten Hauptfläche (132) und mit einer Vielzahl von Öffnungen (133), wobei sich der zweite Bogen (130) zwischen dem ersten Bogen (110) und dem Medikamenten-Einschluss-Bogen (133) befindet, wobei die erste Hauptfläche (131) des zweiten Bogens (130) an der zweiten Hauptfläche (116) des ersten Bogens (110) befestigt ist, wobei die zweite Hauptfläche (132) des zweiten Bogens (130) mit einem permanenten Klebstoff (117) versehen ist;
(f) Abschnitte der ersten Hauptfläche (122) des Medikamenten-Einschluss-Bogens (123), die an dem permanenten Klebstoff (117) auf der zweiten Hauptfläche (132) des zweiten Bogens (130) befestigt sind; und
(g) wobei die abtrennbaren Abschnitte (113) des ersten Bogens (110) deckungsgleich mit den offenen oberen Enden (126) der Medikamenten-Fächer (124) und auch deckungsgleich mit den Öffnungen (133) in dem zweiten Bogen (130) sind, und wobei der permanente Klebstoff (117), der auf der zweiten Hauptfläche (116') des ersten Bogens (110) angeordnet ist, eine Haftfestigkeit aufweist, die ausreichend ist, um den ersten Bogen (110) permanent an die erste Hauptfläche (131) des zweiten Bogens zu kleben, und wobei der temporäre Klebstoff (118), der auf der zweiten Hauptfläche (116") der abtrennbaren Abschnitte (113) angeordnet ist, eine Haftfestigkeit aufweist, die es den selektiv abtrennbaren Abschnitten (113) des ersten Bogens (110) ermöglicht, ohne Abtrennung der Abschnitte des Medikamenten-Einschluss-Bogens (123), der die offenen oberen Enden (126) der Medikamenten-Fächer (124) abdeckt, an welchen der erste Bogen (110) befestigt ist, von dem ersten Bogen (110) abgetrennt zu werden.

4. Blister-Verpackung nach einem der Ansprüche 1 bis 3, wobei der erste Bogen (110) Papier ist.

5. Blister-Verpackung nach einem der Ansprüche 1 bis 3, wobei der erste Bogen (110) ein synthetisches Material ist.

6. Blister-Verpackung nach Anspruch 2 oder Anspruch 3, wobei der zweite Bogen (130) ein synthetisches Material ist.

7. Blister-Verpackung nach einem der Ansprüche 1 bis 3, die des Weiteren Abtrennungs-Erleichtungs-Kerben zur Erleichterung der selektiven Abtrennung der abtrennbaren Abschnitte (113) des ersten Bogens (110) aufweist.

8. Blister-Verpackung nach einem der Ansprüche 1 bis 3, wobei der Medikamente enthaltende Bogen (123) transparent ist.

9. Blister-Verpackung nach einem der Ansprüche 1 bis 3, die des Weiteren eine Lasche (115) aufweist, die an jedem abtrennbaren Abschnitt (113) befestigt ist.

10. Blister-Verpackung nach Anspruch 9, die des Weiteren ein Mittel (129) zur Erleichterung der selektiven Abtrennung der abtrennbaren Abschnitte (113) aufweist.

11. Blister-Verpackung nach Anspruch 10, wobei das Mittel (129) aus der Gruppe ausgewählt wird, die aus Schlitzen und Perforationen besteht.

## Revendications

1. Emballage coque à l'épreuve des enfants et facile à utiliser par des personnes âgées, comprenant :
(a) une première feuille (110) ayant une première surface majeure (111) et une seconde surface majeure (116) et une pluralité de parties sélectivement amovibles (113), la seconde surface majeure (116") des parties amovibles (113) étant prévue avec un adhésif temporaire directement appliqué (118), et la seconde surface majeure (116') des parties non amovibles (112) étant prévue avec un adhésif permanent directement appliqué (117) ;
(b) un emballage coque (119) ayant une pluralité de compartiments de médicament (124), chacun de la pluralité de compartiments (124) ayant une extrémité inférieure fermée (125) et une extrémité supérieure ouverte (126) pour recevoir un médicament (127) ;
(c) une feuille de confinement de médicament (123) ayant une première surface majeure (122) et une seconde surface majeure (128), la seconde surface majeure (128) de la feuille de confinement (123) étant fixée à l'emballage coque (119) et la première surface majeure (122) de la feuille de confinement (123) étant fixée de manière permanente à l'adhésif permanent (117) sur la seconde surface majeure (116') de la première feuille (110) ;
(d) dans lequel les parties amovibles (113) de la première feuille (110) sont alignées avec les extrémités supérieures ouvertes (126) des compartiments de médicament (124), et dans lequel l'adhésif temporaire (118) sur la seconde surface majeure (116") des parties amovibles (113) de la première feuille (110) a une résistance adhésive qui est suffisante pour faire adhérer temporairement la seconde surface majeure (116") des parties amovibles (134) de la première feuille (110) à la première surface majeure (122) de la feuille de confinement de médicament (123), et une résistance adhésive qui permet aux parties sélectivement amovibles (113) de la première feuille (110) d'être retirées sans retirer les parties de la feuille de confinement de médicament (123) recouvrant les extrémités supérieures ouvertes (126) des compartiments de médicament (124) auxquelles les parties amovibles (113) de la première feuille (110) sont fixées.

2. Emballage coque à l'épreuve des enfants et facile à utiliser par des personnes âgées selon la revendication 1, comprenant en outre :
(e) une seconde feuille (130) ayant une première surface majeure (131) et une seconde surface majeure (132) et une pluralité de parties amovibles (137), la seconde feuille (130) étant intercalée entre la première feuille (110) et la feuille de confinement de médicament (123), la première surface majeure (131) de la seconde feuille (130) étant fixée à la seconde surface majeure (116) de la première feuille (110), la seconde surface majeure (132) de la seconde feuille (130) étant prévue avec un adhésif permanent (117) ;
(f) des parties de la première surface majeure (122) de la feuille de confinement de médicament (123) sont fixées de manière permanente à l'adhésif permanent (117) sur la seconde surface majeure (132) de la seconde feuille (130) ; et
(g) dans lequel les parties amovibles (113) de la première feuille (110) sont alignées avec les extrémités supérieures ouvertes (126) des compartiments de médicament (124) et avec les parties amovibles (137) de la seconde feuille (130), et dans lequel l'adhésif permanent (117) sur la seconde surface majeure (116') de la première feuille (110) a une résistance adhésive qui est suffisante pour faire adhérer de manière permanente la première feuille (110) à la première surface majeure (131) de la seconde feuille (130) et dans lequel l'adhésif temporaire (118) sur la seconde surface majeure (116") des parties amovibles (113) de la première feuille (110) a une résistance adhésive qui permet aux parties sélectivement amovibles (113) de la première feuille (110) d'être retirées de la seconde feuille (130) sans retirer les parties sélectivement amovibles (137) de la seconde feuille (130) auxquelles la première feuille (110) est fixée.

3. Emballage coque à l'épreuve des enfants et facile à utiliser par des personnes âgées selon la revendication 1, comprenant en outre :
(e) une seconde feuille (130) ayant une première surface majeure (131) et une seconde surface majeure (132) et étant prévue avec une pluralité d'ouvertures (133), la seconde feuille (130) étant intercalée entre la première feuille (110) et la feuille de confinement de médicament (133), la première surface majeure (131) de la seconde feuille (130) étant fixée à la seconde surface majeure (116) de la première feuille (110), la seconde surface majeure (132) de la seconde feuille (130) étant prévue avec un adhésif permanent (117) ;
(f) une partie de la première surface majeure (122) de la feuille de confinement de médicament (123) est fixée à l'adhésif permanent (117) sur la seconde surface majeure (132) de la seconde feuille (130) ; et
(g) dans lequel les parties amovibles (113) de la première feuille (110) sont alignées avec les extrémités supérieures ouvertes (126) des compartiments de médicament (124) et également alignées avec les ouvertures (133) dans la seconde feuille (130), et dans lequel l'adhésif permanent (117) disposé sur la seconde surface majeure (116') de la première feuille (110) a une résistance adhésive qui est suffisante pour faire adhérer de manière permanente la première feuille (110) sur la première surface majeure (131) de la seconde feuille, et dans lequel l'adhésif temporaire (118) disposé sur la seconde surface majeure (116") des parties amovibles (113) a une résistance adhésive qui permet aux parties sélectivement amovibles (113) de la première feuille (110) d'être retirées de la première feuille (110) sans retirer les parties de la feuille de confinement de médicament (123) recouvrant les extrémités supérieures ouvertes (126) des compartiments de médicament (124) auxquelles la première feuille (110) est fixée.

4. Emballage coque selon l'une quelconque des revendications 1 à 3, dans lequel la première feuille (110) est du papier.

5. Emballage coque selon l'une quelconque des revendications 1 à 3, dans lequel la première feuille (110) est un matériau synthétique.

6. Emballage coque selon la revendication 2 ou la revendication 3, dans lequel la seconde feuille (130) est un matériau synthétique.

7. Emballage coque selon l'une quelconque des revendications 1 à 3, comprenant en outre des encoches de facilitation de retrait afin de faciliter le retrait sélectif des parties amovibles (113) de la première feuille (110).

8. Emballage coque selon l'une quelconque des revendications 1 à 3, dans lequel la feuille de confinement de médicament (123) est transparente.

9. Emballage coque selon l'une quelconque des revendications 1 à 3, comprenant en outre une languette (115) fixée à chaque partie amovible (113).

10. Emballage coque selon la revendication 9, comprenant en outre des moyens (129) pour faciliter le retrait sélectif des parties amovibles (113).

11. Emballage coque selon la revendication 10, dans lequel les moyens (129) sont sélectionnés dans le groupe comprenant les fentes et les perforations.
